# EUROPEAN PATENT SPECIFICATION

(11) **EP 2 837 839 B1**
(45) Date of publication and mention of the grant of the patent: **20.12.2017**
(21) Application number: 13776355.3
(22) Date of filing: 11.04.2013
(51) Int. Cl.: F16C 33/78, B60B 35/18, F16C 19/38, F16C 41/00, F16J 15/32

(54) **WHEEL BEARING SEALING DEVICE**
RADLAGERDICHTUNGSVORRICHTUNG
DISPOSITIF D'ÉTANCHÉITÉ DE ROULEMENT DE ROUE

(30) Priority: 13.04.2012 JP 2012091875
(43) Date of publication of application: 18.02.2015
(73) Proprietor: NTN Corporation, Osaka-shi, Osaka 550-0003 (JP)
(72) Inventor: SEKI, Makoto, Shizuoka 4388510 (JP); BABA, Tomoki, Shizuoka 4388510 (JP)
(74) Representative: Cohausz & Florack
(86) International application number: PCT/JP2013/060989
(87) International publication number: WO 2013/154170

(56) References cited:
- EP-A1- 0 304 160
- EP-A1- 1 484 519
- EP-A1- 1 548 307
- WO-A1-2010/069703
- DE-A1-102006 047 016
- JP-A- 2003 269 617
- JP-A- 2005 299 685
- JP-A- 2006 161 917

## Description

### Field of the Invention

The present invention relates to a seal device for a wheel bearing for rotationally supporting wheels of a vehicle relative to a suspension apparatus of a vehicle.

### Description of Background Art

A wheel bearing apparatus is intended to freely rotationally support a wheel hub for mounting a wheel via a double row rolling bearing and there are those used for a driving wheel and a driven wheel. From reasons of structure, the inner ring rotation type is used for the driving wheel and both the inner ring rotation type and the outer ring rotation type are used for the driven wheel. There are four generation types in the wheel bearing apparatus, that is, the first generation type in which a wheel bearing comprising double row angular contact ball bearing etc. is fitted between a knuckle forming part of a suspension apparatus and the hub wheel, the second generation type in which a body mounting flange or a wheel mounting flange is directly formed on the outer circumference of an outer member of the wheel bearing apparatus, the third generation type in which one inner raceway surface is directly formed on the outer circumference of the hub wheel, and the fourth generation type in which the inner raceway surface is directly formed on the outer circumference respectively of the wheel hub and an outer joint member of a constant velocity universal joint.

In such a wheel bearing, there is provided a seal device for preventing leakage of grease sealed in the inside of bearing and entering of rain water or dust from the outside into the bearing. It is one of causes of premature damage of the seal device that the seal device is used under severe environments of low temperature and muddy water. It is afraid that a sealing member would be caused deterioration of tightening force and followability due to reduction of elasticity under the environment of low temperature even if the sealing member is formed of improved material in the low temperature property and thus caused premature entering of muddy water into the inside of the bearing. The sealability under the low temperature environment can be improved by providing a garter spring on the sealing member which can maintain the tightening force and followability even under low temperature.

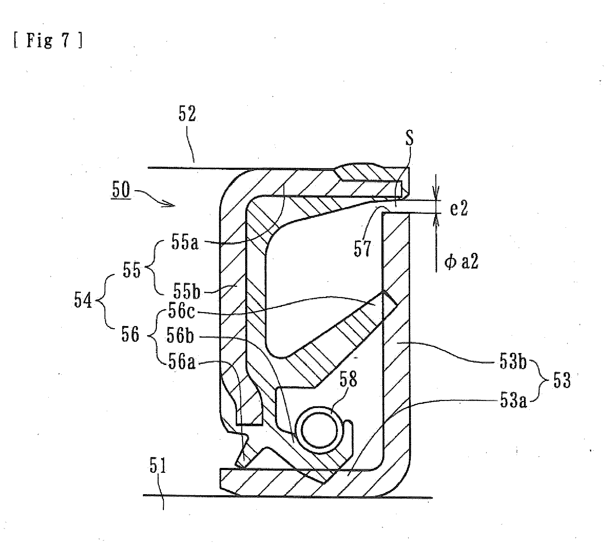

One example of seal devices of the prior art provided with such a garter spring is shown in Fig. 7. This seal device 50 is a so-called pack-seal comprising a slinger 53 disposed between an inner member 51 and an outer member 52 which are coaxially arranged each other and a sealing plate 54.

The slinger 53 comprises a cylindrical portion 53a to be press-fitted onto the outer circumference of the inner member 51 and an annular portion 53b extending radially outward from the cylindrical portion 53a. On the other hand, the sealing plate 54 comprises a core metal 55 and a sealing member 56 integrally adhered to the core metal 55 via vulcanized adhesion and the core metal comprises a cylindrical portion 55a to be press-fitted into the inner circumference of the outer member 52 and an annular portion 55b extending radially inward from the cylindrical portion 55a.

The sealing member 56 is formed of rubber material and comprises a grease lip 56a and a dust lip 56b slide-contacting with the cylindrical member 53a of the slinger 53 and an axial lip 56c slide-contacting with the annular portion 53b.

The cylindrical portion 53a of the slinger 53 and the cylindrical portion 55a of the core metal 55 are oppositely arranged in a radial direction via a predetermined radial distance. The annular portion 53b of the slinger 53 and the annular portion 55b of the core metal 55 are also oppositely arranged in an axial direction via a predetermined axial distance with positioning the former at an axially inboard-side and the latter at an axially outboard-side. An annular gap "S" is formed between a radially outermost end face 57 of the annular portion 53b of the slinger 53 and the cylindrical portion 55a of the core metal 55 to form a labyrinth seal.

The radially outermost end face 57 of the annular portion 53b of the slinger 53 is precisely finished by machining so that a dimension "ϕa2" of the outer diameter of the annular portion 53b of the slinger 53 and a dimension "e2" of the gap "S" have high precision. This enables to finish the radially outermost end face 57 as having a surface without any excess material such as burrs to improve the sealability with reducing the gap "S" as small as possible (see Patent Document 1 below).
Document EP 0 304 160 A1 also discloses a seal device for a wheel bearing in terms of a pack seal comprising a slinger and a sealing plate. However, the tightening force of the garter spring is not specified and therefore has not been optimized for use at low and normal temperatures.

### Citation List

### Patent Document

Patent Document 1: JP 2010-190323 A

### Summary of the Invention

### Problems to be solved by the Invention

According to the seal device 50 of the prior art, the garter spring 58 is mounted on the dust lip 56b and thus it is possible to keep the tightening force and to prevent deterioration of the followability. However, since not only the tightening force of the dust lip 56b but a ratio of the tightening force of the garter spring 58 among the total tightening force of the dust lip 56b have not been analyzed and managed heretofore, there has been variation in the sealability at the normal temperature and at a low temperature.

It is, therefore, an object of the present invention to establish an optimum specification based on the tightening force of the radial lip of the pack-seal and to provide a seal device for a wheel bearing which can improve the sealability under both low temperature environment and muddy water environment.

### Means for solving problems

For achieving the object of the present invention mentioned above, there is provided, according to the present invention of claim 1, a seal device for a wheel bearing, the wheel bearing comprising an outer member formed on its inner circumference with double row outer raceway surfaces; an inner member including a hub wheel and at least one inner ring fitted onto a cylindrical portion of the wheel hub or an outer joint member of a constant velocity universal joint, the hub wheel being integrally formed on its one end with a wheel mounting flange and having a cylindrical portion axially extending from the wheel mounting flange, the inner member being formed on its outer circumference with double row inner raceway surfaces opposing to the double row outer raceway surfaces; and double row rolling elements rollably contained between the inner and outer raceway surfaces; the seal device being mountable on the wheel bearing, to seal an opening of an annular space formed between the outer member and inner member, the seal device being formed as a pack seal comprising an annular sealing plate and an annular slinger each having a substantially "L" shaped cross-section and arranged oppositely toward each other; the sealing plate comprising a core metal and a sealing member integrally adhered to the core metal via vulcanized adhesion, the core metal being press-formed of steel sheet and including a cylindrical fitting portion adapted to be press-fitted into an inner circumference of the end of the outer member via a predetermined interference and a radially inner portion extending radially inward from one end of the fitting portion; the slinger comprising a cylindrical portion adapted to be press-fitted on to an outer circumference of the inner member and a standing portion extending radially outward from the cylindrical portion; and the sealing member comprising a base portion covering an inner circumferential surface of the core metal, a side lip inclined radially outward from the base portion and slide-contacting with the standing portion of the slinger via a predetermined axial interference, and a radial lip inclined radially inward from the side lip and slide-contacting with the cylindrical portion of the slinger via a predetermined radial interference characterized in that a garter spring is mounted on the radial lip, that the tightening force of the garter spring is set to 50% or more of total tightening force of the radial lip, and that the tightening force of the radial lip without the garter spring is set to 3N or more.

According to the seal device of claim 1 of the present invention, since it is formed as a pack seal comprising an annular sealing plate and an annular slinger each having a substantially "L" shaped cross-section and arranged oppositely toward each other; the sealing plate comprising a core metal and a sealing member integrally adhered to the core metal via vulcanized adhesion, the core metal being press-formed of steel sheet and including a cylindrical fitting portion adapted to be press-fitted into an inner circumference of the end of the outer member via a predetermined interference and a radially inner portion extending radially inward from one end of the fitting portion; the slinger comprising a cylindrical portion adapted to be press-fitted on to an outer circumference of the inner member and a standing portion extending radially outward from the cylindrical portion; and the sealing member comprising a base portion covering an inner circumferential surface of the core metal, a side lip inclined radially outward from the base portion and slide-contacting with the standing portion of the slinger via a predetermined axial interference, and a radial lip inclined radially inward from the side lip and slide-contacting with the cylindrical portion of the slinger via a predetermined radial interference characterized in that a garter spring is mounted on the radial lip, that the tightening force of the garter spring is set to 50% or more of total tightening force of the radial lip, and that the tightening force of the radial lip without the garter spring is set to 3N or more, it is possible to provide a seal device for a wheel bearing which can eliminate variation in the sealability at the normal temperature and at a low temperature and improve the sealability under both low temperature environment and muddy water environment. In addition, it is possible to surely maintain the tightening force of the radial lip sufficient to keep the rigidity of the garter spring.

It is preferable as defined in claim 2 that the tightening force of the radial lip at the normal temperature (20°C) is set to 12N or more. This makes it possible to keep stable sealability.

It is preferable as defined in claim 3 that the tightening force of the radial lip at a low temperature (-20°C) is set to 10N or more. This makes it possible to surely keep the sealability at a low temperature.

It is also preferable as defined in claim 4 that "TR 10" of the sealing member is set to -35°C or less wherein "TR 10" is an index indicating the elasticity of rubber and means that the elastic recovery rate at a low temperature of the sealing member is 10%. This makes it possible to keep the lip followability under the low temperature environment and thus to improve the muddy water resistance.

It is preferable as defined in claim 5 that the garter spring is formed of stainless steel. This makes it possible to keep high corrosion resistance for a long term.

It is also possible as defined in claim 6 that the tip end of the fitting portion of the core metal is thinned and the sealing member is adhered to the tip end so that it wraps up the tip end to form a "half metal structure". This makes it possible to improve the sealability of the fitting portion of the core metal and thus to protect the inside of the bearing.

It is preferable as defined in claim 7 that the base portion of the sealing member is inclined toward the tip end of the fitting portion of the core metal, and that the outer peripheral edge of the standing portion of the slinger is opposed to the tip end of the sealing member via a slight radial gap to form a labyrinth seal therebetween and the radial gap is set to 0.75 mm or less. This makes it possible to prevent entering of rain water or dust from the outside into the inside of the bearing and to discharge once entered rain water or dust to the outside of the bearing by centrifugal force and thus to improve the sealability of the bearing.

### Effects of the Invention

According to the seal device for a wheel bearing, since it comprises an outer member formed on its inner circumference with double row outer raceway surfaces; an inner member including a wheel hub and at least one inner ring fitted onto a cylindrical portion of the hub wheel or an outer joint member of a constant velocity universal joint, the wheel hub being integrally formed on its one end with a wheel mounting flange and having a cylindrical portion axially extending from the wheel mounting flange, the inner member being formed on its outer circumference with double row inner raceway surfaces opposing to the double row outer raceway surfaces; and double row rolling elements rollably contained between the inner and outer raceway surfaces; the seal device being mountable on the wheel bearing, to seal an opening of an annular space formed between the outer member and inner member, the seal device being formed as a pack seal comprising an annular sealing plate and an annular slinger each having a substantially "L" shaped cross-section and arranged oppositely toward each other; the sealing plate comprising a core metal and a sealing member integrally adhered to the core metal via vulcanized adhesion, the core metal being press-formed of steel sheet and including a cylindrical fitting portion adapted to be press-fitted into an inner circumference of the end of the outer member via a predetermined interference and a radially inner portion extending radially inward from one end of the fitting portion; the slinger comprising a cylindrical portion adapted to be press-fitted on to an outer circumference of the inner member and a standing portion extending radially outward from the cylindrical portion; and the sealing member comprising a base portion covering an inner circumferential surface of the core metal, a side lip inclined radially outward from the base portion and slide-contacting with the standing portion of the slinger via a predetermined axial interference, and a radial lip inclined radially inward from the side lip and slide-contacting with the cylindrical portion of the slinger via a predetermined radial interference and is characterized in that a garter spring is mounted on the radial lip, that the tightening force of the garter spring is set to 50% or more of total tightening force of the radial lip, and that the tightening force of the radial lip without the garter spring is set to 3 N or more, it is possible to provide a seal device for a wheel bearing which can eliminate variation in the sealability at the normal temperature and at a low temperature and improve the sealability under both low temperature environment and muddy water environment. In addition, it is possible to surely maintain the tightening force of the radial lip sufficient to keep the rigidity of the garter spring.

### Brief Description of the Drawings

[Fig.1] A longitudinal-section view of one embodiment of a seal device of a wheel bearing of the present invention;
[Fig.2] A partially enlarged view of Fig. 1 showing one seal device;
[Fig. 3] An explanatory view showing a total tightening force of the seal device of Fig. 2;
[Fig. 4] An explanatory view showing a tightening force under a condition in which the dust lip is not provided with a garter spring;
[Fig.5] A graph showing measurements results of the tightening force of a radial lip under a severe environment at the normal temperature;
[Fig. 6] A graph showing measurements results of the tightening force of a radial lip under a severe environment at a low temperature; and
[Fig.7] A longitudinal-section view of a seal device of the prior art.

### Best mode for carrying out the Invention

Best mode for carrying out the present invention is a seal device for a wheel bearing adapted to be mounted on the wheel bearing to seal an opening of an annular space between the outer member and inner member, the wheel bearing comprising an outer member formed on its inner circumference with double row outer raceway surfaces; an inner member including one pair of inner rings each being formed on its outer circumference with double row inner raceway surfaces opposing to the double row outer raceway surfaces; and double row rolling elements rollably contained between the inner and outer raceway surfaces characterized in that the seal device is formed as a pack seal comprising an annular sealing plate and an annular slinger each having a substantially "L" shaped cross-section and arranged oppositely toward each other; the sealing plate comprising a core metal and a sealing member integrally adhered to the core metal via vulcanized adhesion, the core metal being press-formed of steel sheet and including a cylindrical fitting portion adapted to be press-fitted into an inner circumference of the end of the outer member via a predetermined interference and a radially inner portion extending radially inward from one end of the fitting portion; the slinger comprising a cylindrical portion adapted to be press-fitted on to an outer circumference of the inner member and a standing portion extending radially outward from the cylindrical portion; and the sealing member comprising a base portion covering an inner circumferential surface of the core metal, a side lip inclined radially outward from the base portion and slide-contacting with the standing portion of the slinger via a predetermined axial interference, and a bifurcated radial lip formed radially inward from the side lip and including a grease lip and dust lip slide-contacting with the cylindrical portion of the slinger via a predetermined radial interference, that a garter spring is mounted on the dust lip, that the tightening force of the garter spring is set to 50% or more of total tightening force of the radial lip, and that the tightening force of the radial lip without the garter spring is set to 3N or more.

### Embodiment

One embodiment of the present invention will be described with reference to accompanied drawings.

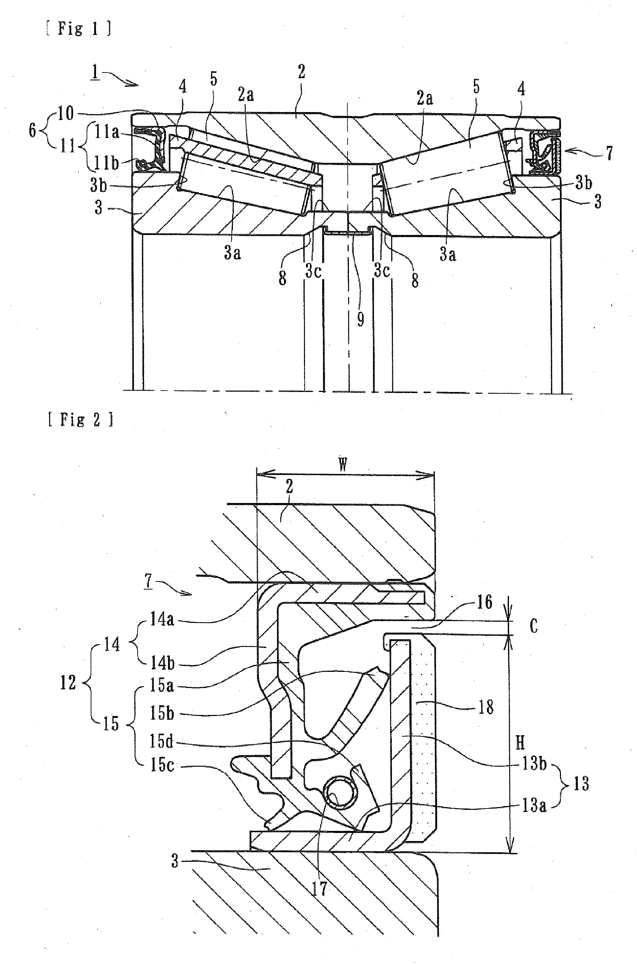

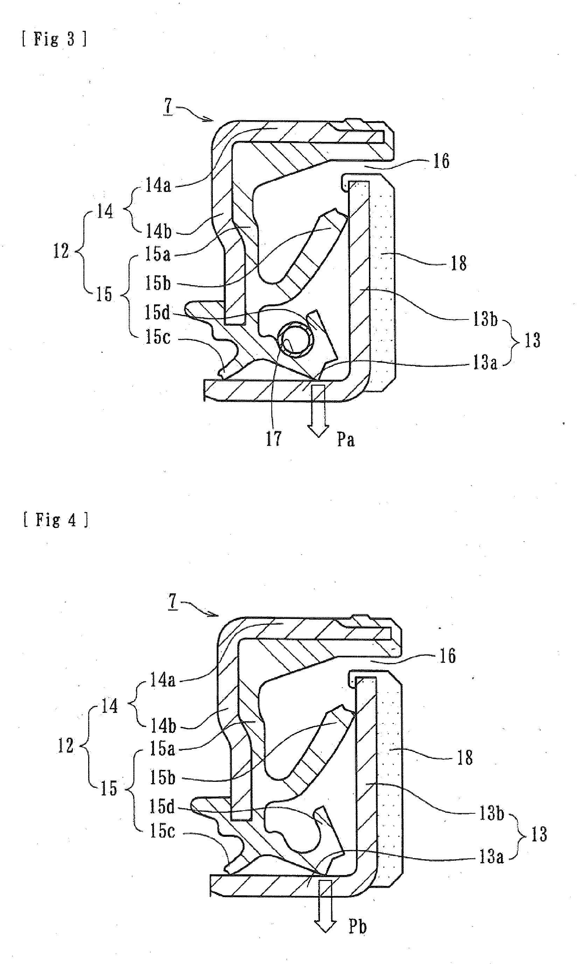

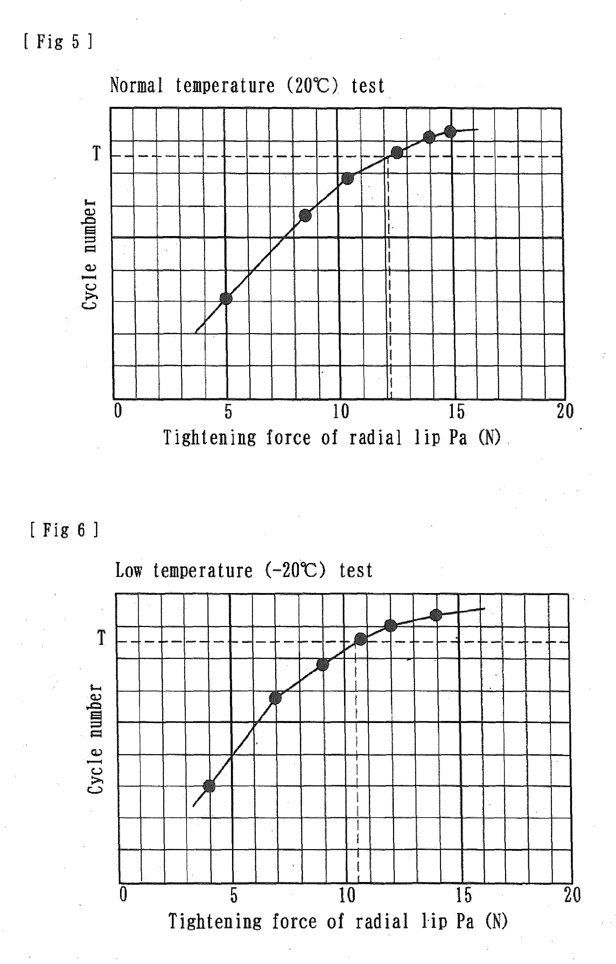

Fig. 1 is a longitudinal-section view of one embodiment of a seal device of a wheel bearing of the present invention; Fig. 2 is a partially enlarged view of Fig. 1 showing one seal device; Fig. 3 is an explanatory view showing a total tightening force of the seal device of Fig. 2; Fig. 4 is an explanatory view showing a tightening force under a condition in which the dust lip is not provided with a garter spring; Fig. 5 is a graph showing measurements results of the tightening force of a radial lip under a severe environment at the normal temperature; and Fig. 6 is a graph showing measurements results of the tightening force of a radial lip under a severe environment at a low temperature. In the description in this specification, an outer side of the seal device when it is mounted on a vehicle is referred to as "outboard-side" (left side of Fig. 1) and inner side of the seal device is referred to as "inboard-side" (right side of Fig. 1).

The wheel bearing 1 shown in Fig. 1 is a so-called "first generation" type and comprises an outer member (outer ring) 2 formed on its inner circumference with tapered double row outer raceway surfaces 2a, 2a opened toward axially inboard-side and outboard-side, a pair of inner rings 3, 3 each formed on its outer circumference with tapered inner raceway surface 3a opposing to the double row outer raceway surfaces 2a, 2a, and double row rolling elements (tapered rollers) 5, 5 contained between the outer and inner raceway surfaces 2a, 2a and 3a, 3a via cages 4.

A larger diameter end of the inner raceway surface 3a of each inner ring 3 is formed with a cone back face rib 3b for guiding the rolling elements 5 and a cone front face rib 3c is formed on a smaller diameter end of the inner raceway surface 3a for preventing slipping-off of the rolling elements 5. The smaller diameter ends of the pair of inner rings 3, 3 are abutted each other to form the wheel bearing 1 of the back-to-back duplex type.

The outer member 2, inner rings 3 and rolling elements 5 are made of high carbon chrome steel such as SUJ2 and hardened to their core by dipping quenching so as to have a surface hardness of 58 to 64 HRC. Seal devices 6, 7 are arranged in openings of annular spaces formed between the outer member 2 and the inner rings 3, 3 to prevent leakage of grease contained within the bearing as well as entering of rainwater or dust into the bearing.

An annular connection member 9 is fitted into annular grooves 8, 8 each formed on the smaller diameter end of the inner circumference of each inner ring 3. The annular connection member 9 is press-formed of steel sheet such as tool steel and spring steel etc. to an ended ring having a "C"-shaped cross-section and hardened by thermal refining or quenching to surface hardness of 40 to 55 HRC.

The pair of inner rings 3, 3 can be united without any rattle by fitting the annular connection member 9 into the annular grooves 8, 8. This makes operations of assembly and disassembly easy. In addition, since the paired inner rings 3, 3 press-fitted into an axle of a vehicle can be integrally pulled out from the axle in service of bearing device, it is possible to prevent that only inboard-side inner ring 3 would be remained on the axle.

Although it is shown here the double row tapered roller bearing using tapered rollers as the rolling elements 5, the present invention may be applied to a double row angular contact ball bearing using balls as rolling elements. In addition, the present invention may be applied to not only the illustrated first generation type but also the second generation type having an outer member formed with a flange, the third generation type having inner raceway surface directly formed on the outer circumference of a wheel hub and the fourth generation type in which a inner raceway surface is directly formed on the outer circumference of an outer joint member of a constant velocity universal joint.

The outboard-side seal device 6 is an integrated seal comprising a core metal 10 press-fitted into an end inner circumference of the outer member (outer ring) 2 and sealing member 11 integrally adhered to the core metal by vulcanized adhesion. The core metal 10 is press-formed of austenitic stainless steel sheet (JIS SUS 304 etc.) or cold rolled steel sheet (JIS SPCC etc.) as having a substantially L-shaped cross-section. On the other hand, the sealing member 11 is formed of synthetic rubber such as NBR (acrylonitrile butadiene rubber) and has a bifurcated radial lip (a grease lip 11a and a dust lip 11b) slide contacting with the outer circumference of the inner ring 3. The sealing member 11 is adhered to the core metal 10 to wrap up its external surface so as to form a so-called "half metal structure". This enables to improve the sealability and protect the inside of the bearing.

There are examples of materials of the sealing member 11 other than NBR, e.g. HNBR (hydrogenation acrylonitric-butadiene rubber), EPDM (ethylene propylene rubber), ACM (poly-acrylic rubber), FKM (fluororubber) or silicone rubber etc. which are superior in heat and/or chemical resistance.

As shown in the enlarged view of Fig. 2, the inboard-side seal device 7 comprises an annular sealing plate 12 and an annular slinger 13 each having a substantially L-shaped cross-section and oppositely arranged toward each other and is formed as a so-called "pack seal". The sealing plate 12 comprises a core metal 14 to be press-fitted into the outer member (outer ring) 2 and a sealing member 15 integrally adhered to the core metal 14.

The core metal 14 is press-formed of austenitic stainless steel sheet or cold rolled steel sheet as having a substantially L-shaped cross-section and comprises a cylindrical fitting portion 14a press-fitted into an end inner circumference of the outer member (outer ring) 2 and a radially inner portion 14b extending radially inward from one end of the fitting portion 14a. The tip end of the fitting portion 14a of the core metal 14 is thinned and the sealing member 15 is adhered to the tip end so that it wraps up the tip end to form a so-called "half metal structure".

On the other hand, the sealing member 15 is formed of synthetic rubber such as NBR and has a base portion 15a covering an inner circumferential surface of the fitting portion 14a of the core metal 14, a side lip 15b inclined radially outward from the base portion 15a, and a bifurcated radial lip (i.e. a grease lip 15c and a dust lip 15d) formed radially inward from the side lip 15b. A garter spring 17 formed e.g. of austenitic stainless steel is mounted on the dust lip 15d of the radial lip. High corrosion resistance can be proved by forming the garter spring 17 of austenitic stainless steel. There are examples of materials of the sealing member 15 other than NBR, e.g. HNBR, EPDM, ACM, FKM or silicone rubber etc. which are superior in heat resistance.

The base portion 15a of the sealing member 15 is inclined toward the tip end of the fitting portion 14a of the core metal 14, and the outer peripheral edge of a standing portion 13b of a slinger 13 is opposed to the tip end of the sealing member 15 via a slight radial gap "C" to form a labyrinth seal 16 therebetween. This makes it possible to prevent entering of rain water or dust from the outside into the inside of the bearing and to discharge once entered rain water or dust to the outside of the bearing by centrifugal force and thus to improve the sealability of the bearing.

According to the present embodiment, TR 10 of the sealing member is set to -35°C or less, in which "TR 10" is an index indicating the elasticity of rubber and means that the elastic recovery rate at a low temperature of the sealing member 15 is 10%. This makes it possible to keep the lip followability under the low temperature environment and thus to improve the muddy water resistance.

The slinger 13 is press-formed of ferritic stainless steel sheet (J1S SUS 430 etc.) or preserved cold rolled steel sheet as having a substantially L-shaped cross-section and comprises a cylindrical portion 13a press-fitted into an end outer circumference of the inner ring 3 and a standing portion 13b extending radially outward from the cylindrical portion 13a. The side lip 15b of the sealing member 15 slide-contacts with the standing portion 13b via a predetermined axial interference and the radial lip (i.e. the grease lip 15c and the dust lip 15d) slide-contacts with the cylindrical portion 13a via a predetermined radial interference.

The magnetic encoder 18 is integrally adhered to the inboard-side surface of the standing portion 13b of the slinger by vulcanized adhesion. The magnetic encoder 18 is formed of elastomer such as synthetic rubber mingled with magnetic powder such as ferrite and constructs a rotary encoder for detecting the wheel speed having N and S poles alternately arranged along its circumference. Since the slinger 13 is formed of ferritic steel sheet, it is possible to prevent corrosion of the slinger 13 for a long term and increase the magnetic output of the encoder 18 to ensure stable detecting accuracy.

A test of the sealability was carried out with supposing severe environment. This test intended to find out a relation between the sealability and a ratio of the tightening force Pg of the garter spring 17 for the total tightening force Pa of the radial lip (i.e. the grease lip 15c and the dust lip 15d). That is, each ratio ((Pa-Pb)/Pa) was obtained to determine the sealability, wherein Pa: total tightening force of the radial lip (see Fig. 3), Pb: tightening force of the radial lip without the garter spring 17 (in this case the tightening force almost corresponds to that of the dust lip 15d). The results of which are shown in Table 1. The seal device used in this test has specifications of a cross-section height H: 7.0 mm, a width W: 5.0 mm and a radial gap C of the labyrinth seal: 0.75 mm (see Fig. 2).

**[Table 1]**

| | | | | | | |
|---|---|---|---|---|---|---|
| Pg [%] | 0 | 28 | 42 | 51 | 56 | 60 |
| Sealability | × (low) | × (low) | × (low) | ○ (high) | ○ (high) | ○ (high) |

Since the garter spring 17 is more immune to the temperature effect than the synthetic rubber, it can be supposed that the sealability can be assured so that the ratio of the tightening force of the garter spring 17 is high. From the results of this test, it is found that at least 50% ratio of the tightening force Pg of the garter spring of the total tightening force Pa of the radial lip is required in order to assure the sealability of the wheel bearing.

In addition, the applicant carried out a confirmation test of a relation between the tightening force Pa and the durability of the radial lip (the dust lip and the grease lip) at the normal temperature and a low temperature and the results of which are shown in Figs. 5 and 6. As can be seen from the results of test, 12N or more tightening force Pa of the radial lip (Pa≧12N) is required at the normal temperature (20°C) to clear the spec value T which is pass/fail determination criteria (see Fig. 5). On the other hand, it is found that 10N or more tightening force Pa of the radial lip (Pa≧10N) is required at a low temperature (-20°C) to clear the spec value T which is pass/fail determination criteria (see Fig. 6). Furthermore, since the dust lip 15d is required a tightening force at least able to hold rigidity of the garter spring 17, the tightening force Pb of the radial lip without the garter spring 17 is set to 3N or more (Pb≧3N).

As described above, according to the present invention it is possible to provide a seal device for a wheel bearing comprising a pack seal used under a severe environment which can eliminate variation of the sealability between the normal temperature and a low temperature and improve the sealability under the low temperature environment and muddy water environment by analyzing the rate of the tightening force of the garter spring for the total tightening force of the radial lip and establishing an optimum specification.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### Applicability in Industry

The seal device for a wheel bearing of the present invention can be applied to wheel bearings of inner ring rotation structure of the first through fourth generation types.

### Description of Reference numerals

- 1: wheel bearing
- 2: outer member (outer ring)
- 2a: outer raceway surface
- 3: inner ring
- 3a: inner raceway surface
- 3b: cone back face rib
- 3c: cone front face rib
- 4: cage
- 5: rolling element
- 6: seal device of outboard-side
- 7: seal device of inboard-side
- 8: annular groove
- 9: annular connection member
- 10, 14: core metal
- 11, 15: sealing member
- 11a, 11b: radial lip
- 12: sealing plate
- 13: slinger
- 13a: cylindrical portion
- 13b: standing portion
- 14a: fitting portion
- 14b: radially inner portion
- 15a: base portion of sealing member
- 15b: side lip
- 15c: grease lip
- 15d: dust lip
- 16: labyrinth seal
- 17: garter spring
- 18: magnetic encoder
- 50: seal device
- 51: inner member
- 52: outer member
- 53: slinger
- 53a, 55a: cylindrical portion
- 53b, 55b: annular portion
- 54: sealing plate
- 55: core metal
- 56: sealing member
- 56a: grease lip
- 56b: dust lip
- 56c: axial lip
- 57: radially outermost end face
- 58: garter spring
- a2: outer diameter of annular portion of slinger
- e2: dimension of gap
- C: radial gap of labyrinth seal
- H: cross-section height
- Pa: total tightening force of radial lip
- Pb: tightening force without garter spring
- Pg: tightening force of garter spring
- S: gap
- T: spec value as pass/fail determination criteria
- W: width of seal device

## Claims

1. A seal device for a wheel bearing, the wheel bearing comprising an outer member (2) formed on its inner circumference with double row outer raceway surfaces (2a, 2a); an inner member including a wheel hub and at least one inner ring (3) fitted onto a cylindrical portion of the wheel hub or an outer joint member of a constant velocity universal joint, the wheel hub being integrally formed on its one end with a wheel mounting flange and having a cylindrical portion axially extending from the wheel mounting flange, the inner member being formed on its outer circumference with double row inner raceway surfaces (3a, 3a) opposing to the double row outer raceway surfaces (2a, 2a); and double row rolling elements (5, 5) rollably contained between the inner and outer raceway surfaces (3a, 3a and 2a, 2a); the seal device being mountable on the wheel bearing, to seal an opening of an annular space formed between the outer member (2) and inner member,
the seal device being formed as a pack seal comprising an annular sealing plate (12) and an annular slinger (13) each having a substantially "L" shaped cross-section and arranged oppositely toward each other; the sealing plate (12) comprising a core metal (14) and a sealing member (15) integrally adhered to the core metal (14) via vulcanized adhesion, the core metal (14) being press-formed of steel sheet and including a cylindrical fitting portion (14a) adapted to be press-fitted into an inner circumference of the end of the outer member (2) via a predetermined interference and a radially inner portion (14b) extending radially inward from one end of the fitting portion (14a); the slinger (13) comprising a cylindrical portion (13a) adapted to be press-fitted on to an outer circumference of the inner member (3) and a standing portion (13b) extending radially outward from the cylindrical portion (13a); and the sealing member (15) comprising a base portion (15a) covering an inner circumferential surface of the core metal (14), a side lip (15b) inclined radially outward from the base portion (15a) and slide-contacting with the standing portion (13b) of the slinger (13) via a predetermined axial interference, and a radial lip (15c, 15d) inclined radially inward from the side lip (15b) and slide-contacting with the cylindrical portion (13a) of the slinger (13) via a predetermined radial interference wherein a garter spring (17) is mounted on the radial lip (15c, 15d), that the tightening force of the garter spring (17) is set to 50 % or more of total tightening force of the radial lip (15c, 15d), and that the tightening force of the radial lip (15c, 15d) without the garter spring (17) is set to 3N or more.

2. A seal device for a wheel bearing of claim 1 wherein the tightening force of the radial lip (15c, 15d) at the normal temperature (20°C) is set to 12N or more.

3. A seal device for a wheel bearing of claim 1 or 2 wherein the tightening force of the radial lip (15c, 15d) at a low temperature (-20°C) is set to 10N or more.

4. A seal device for a wheel bearing of claim 1 wherein "TR 10" of the sealing member (15) is set to -35°C or less wherein "TR 10" is an index indicating the elasticity of the rubber forming the sealing member and means that the elastic recovery rate at a low temperature of the sealing member (15) is 10%.

5. A seal device for a wheel bearing of claim 1 wherein the garter spring is formed of stainless steel.

6. A seal device for a wheel bearing of claim 1 wherein the tip end of the fitting portion (14a) of the core metal (14) is thinned and the sealing member (15) is adhered to the tip end so that it wraps up the tip end to form a "half metal structure".

7. A seal device for a wheel bearing of claim 1 wherein the base portion (15a) of the sealing member (15) is inclined toward the tip end of the fitting portion (14a) of the core metal (14), and wherein the outer peripheral edge of the standing portion (13b) of the slinger (13) is opposed to the tip end of the sealing member (15) via a slight radial gap (C) to form a labyrinth seal (16) therebetween and the radial gap (C) is set to 0.75 mm or less.

## Patentansprüche

1. Dichtungsvorrichtung für ein Radlager, das Radlager umfassend ein äußeres Element (2), das an seinem Innenumfang mit Doppelreihen-Außenlaufbahnflächen (2a, 2a) ausgebildet ist;
ein inneres Element einschließlich einer Radnabe
und mindestens einen Innenring (3), der auf einem zylindrischen Abschnitt der Radnabe oder einem äußeren Verbindungsglied eines Gleichlaufgelenks aufgebracht ist,
wobei die Radnabe auf ihren einen Ende mit einem Radbefestigungsflansch einstückig ausgebildet ist und einen zylindrischen Abschnitt aufweist, der sich axial von dem Radbefestigungsflansch erstreckt, wobei das innere Element auf seinem Außenumfang mit Doppelreihen-Innenlaufbahnflächen (3a, 3a) ausgebildet ist, die den Doppelreihen-Außenlaufbahnflächen (2a, 2a) gegenüberliegen; und Doppelreihen-Rollelemente (5, 5), die zwischen den Innen- und Außenlaufbahnflächen (3a, 3a; 2a, 2a) sicher enthalten sind; wobei die Dichtungsvorrichtung auf dem Radlager anbringbar ist, um eine Öffnung eines ringförmigen Raums abzudichten, der zwischen dem äußeren Element (2) und dem inneren Element gebildet ist,
wobei die Dichtungsvorrichtung als Stapeldichtung ausgebildet ist, die eine ringförmige Dichtungsplatte (12) und einen ringförmigen Schleuderring (13) umfasst, die jeweils einen im Wesentlichen "L"-förmigen Querschnitt aufweisen und einander gegenüberliegend angeordnet sind; die Dichtungsplatte (12) umfassend ein Kernmetall (14) und ein Dichtelement (15), das über vulkanisierte Haftung einstückig an dem Kernmetall (14) angehaftet ist, wobei das Kernmetall (14) aus Blechstahl pressgeformt ist und einen zylindrischen Passabschnitt (14a) enthält, der angepasst ist, über ein vorgegebenes Übermaß in einen Innenumfang des Endes des äußeren Elements (2) pressgepasst zu werden, und einen radial inneren Abschnitt (14b), der sich von einem Ende des Passabschnitts (14a) radial nach innen erstreckt; wobei der Schleuderring (13) einen zylindrischen Abschnitt (13a), der angepasst ist, auf einen Außenumfang des inneren Elements (3) pressgepasst zu werden, und einen stehenden Abschnitt (13b), der sich von dem zylindrischen Abschnitt (13a) radial nach außen erstreckt, umfasst; und wobei das Dichtelement (15) einen Basisabschnitt (15a), der eine innere Umfangsfläche des Kernmetalls (14) abdeckt, eine Seitenlippe (15b), die von dem Basisabschnitt (15a) radial nach außen geneigt ist und mit dem stehenden Abschnitt (13b) des Schleuderrings (13) über ein vorgegebenes axiales Übermaß seitlich in Kontakt tritt, und eine radiale Lippe (15c, 15d), die von der Seitenlippe (15b) radial nach innen geneigt ist und mit dem zylindrischen Abschnitt (13a) des Schleuderrings (13) über ein vorgegebenes radiales Übermaß seitlich in Kontakt tritt, umfasst, wobei eine Wellendichtringfeder (17) auf der radialen Lippe (15c, 15d) angebracht ist, dass die Spannkraft der Wellendichtringfeder (17) auf 50% oder mehr der Gesamtspannkraft der radialen Lippe (15c, 15d) eingestellt ist, und dass die Spannkraft der radialen Lippe (15c, 15d) ohne die Wellendichtringfeder (17) auf 3 N oder mehr eingestellt ist.

2. Dichtungsvorrichtung für ein Radlager nach Anspruch 1, wobei die Spannkraft der radialen Lippe (15c, 15d) bei der Normaltemperatur (20 °C) auf 12 N oder mehr eingestellt ist.

3. Dichtungsvorrichtung für ein Radlager nach Anspruch 1 oder 2, wobei die Spannkraft der radialen Lippe (15c, 15d) bei einer niedrigen Temperatur (-20 °C) auf 10 N oder mehr eingestellt ist.

4. Dichtungsvorrichtung für ein Radlager nach Anspruch 1, wobei "TR 10" des Dichtelements (15) auf-35 °C oder weniger eingestellt ist, wobei "TR 10" ein Index ist, der die Elastizität des Gummis angibt, das das Dichtelement bildet, und bedeutet, dass die elastische Rückstellrate bei einer niedrigen Temperatur des Dichtelements (15) 10% beträgt.

5. Dichtungsvorrichtung für ein Radlager nach Anspruch 1, wobei die Wellendichtringfeder aus rostfreiem Stahl gebildet ist.

6. Dichtungsvorrichtung für ein Radlager nach Anspruch 1, wobei das Spitzenende des Passabschnitts (14a) des Kernmetalls (14) verdünnt ist und das Dichtelement (15) an dem Spitzenende angehaftet ist, so dass es das Spitzenende umwickelt, um eine "Halbmetallstruktur" zu bilden.

7. Dichtungsvorrichtung für ein Radlager nach Anspruch 1, wobei der Basisabschnitt (15a) des Dichtelements (15) hin zu dem Spitzenende des Passabschnitts (14a) des Kernmetalls (14) geneigt ist, und wobei der äußere Umfangsrand des stehenden Abschnitts (13b) des Schleuderrings (13) dem Spitzenende des Dichtelements (15) über einen leichten radialen Spalt (C) gegenüberliegt, um eine Labyrinthdichtung (16) dazwischen zu bilden, und der radiale Spalt (C) auf 0,75 mm oder weniger eingestellt ist.

## Revendications

1. Dispositif d'étanchéité pour roulement de roue, le roulement de roue comprenant un élément extérieur (2) formé sur sa circonférence interne avec les surfaces de roulement extérieures à double rangée (2a, 2a) ; un élément intérieur comprenant un moyeu de roue et au moins un anneau intérieur (3) fixé sur une partie cylindrique du moyeu de roue ou un élément de jonction extérieur d'un joint homocinétique universel, le moyeu de roue présentant, formé d'une pièce sur son extrémité, une bride de montage de roue et présentant une partie cylindrique s'étendant de manière axiale depuis le bride de montage de roue, l'élément intérieur étant formé sur sa circonférence extérieure avec des surfaces de roulement intérieures à double rangée (3a, 3a) opposées aux surfaces de roulement extérieures à double rangée (2a, 2a) ; et des éléments de roulement à double rangée (5, 5) présents entre les surfaces de roulement intérieures et extérieures (3a, 3a et 2a, 2a) ; le dispositif d'étanchéité pouvant être placé sur le roulement de roue, de manière à rendre étanche l'ouverture sur l'espace annulaire formé entre l'élément extérieur (2) et l'élément intérieur,
le dispositif d'étanchéité ayant la forme d'un joint comprenant une plaque d'étanchéité annulaire (12) et une bague (13), chacun ayant une coupe transversale sensiblement en forme de «L» et disposée de manière opposée l'un par rapport à l'autre ; la plaque d'étanchéité (12) comprenant un coeur métallique (14) et un élément d'étanchéité (15) qui adhère au coeur métallique (14) par adhésion par vulcanisation, le coeur métallique (14) étant une feuille d'acier moulée à la presse et comprenant une partie cylindrique d'adaptation (14a) destinée à être ajustée par pression sur la circonférence intérieure de l'extrémité de l'élément extérieur (2) via une interférence prédéterminée et une partie radiale intérieure (14b) s'étendant de manière radiale vers l'intérieur depuis une extrémité de la partie d'adaptation (14a) ; la bague (13) comprenant une partie cylindrique (13a) destinée à être ajustée par pression sur la circonférence extérieure de l'élément intérieur (3), et une partie fixe (13b) s'étendant de manière radiale vers l'extérieur depuis la partie cylindrique (13a) ; l'élément d'étanchéité (15) comprenant une base (15a) couvrant la surface de la circonférence intérieure du coeur métallique (14), un lèvre latérale (15b) inclinée de manière radiale vers l'extérieur depuis la base (15a) et en contact avec la partie fixe (13b) de la bague (13) via une interférence axiale prédéterminée, et une lèvre radiale (15c, 15d) inclinée de manière radiale vers l'intérieur depuis la lèvre latérale (15b) et en contact avec la partie cylindrique (13a) de la bague (13) via une interférence radiale prédéterminée, où un ressort annulaire (17) est monté sur la lèvre radiale (15c, 15d), de sorte que la force de serrage du ressort annulaire (17) soit réglée à 50% ou plus de la force de serrage totale de la lèvre radiale (15c, 15d) et de sorte que la force de serrage de la lèvre radiale (15c, 15d) sans le ressort annulaire (17) soit réglée à 3 N ou plus.

2. Dispositif d'étanchéité pour roulement de roue selon la revendication 1, où la force de serrage de la lèvre radiale (15c, 15d) à température normale (20°C) est réglée à 12 N ou plus.

3. Dispositif d'étanchéité pour roulement de roue selon la revendication 1 ou 2, où la force de serrage de la lèvre radiale (15c, 15d) à basse température (-20°C) est réglée à 10 N ou plus.

4. Dispositif d'étanchéité pour roulement de roue selon la revendication 1, où « TR 10 » de l'élément d'étanchéité est réglé à -35°C ou moins, « TR 10 » étant un indice représentant l'élasticité du caoutchouc formant l'élément d'étanchéité et signifie que le taux de récupération de l'élasticité à basse température de l'élément d'étanchéité (15) est de 10%.

5. Dispositif d'étanchéité pour roulement de roue selon la revendication 1, où le ressort annulaire est composé d'acier inoxydable.

6. Dispositif d'étanchéité pour roulement de roue selon la revendication 1, où l'extrémité pointue de la partie d'adaptation (14a) du coeur métallique (14) est affinée et l'élément d'étanchéité (15) adhère à l'extrémité pointue de sorte qu'il enveloppe la partie pointue pour former une « structure semi-métallique ».

7. Dispositif d'étanchéité pour roulement de roue selon la revendication 1, où la base (15a) de l'élément d'étanchéité (15) est inclinée vers l'extrémité pointue de la partie d'adaptation (14a) du coeur métallique (14), et où le bord de périphérie extérieure de la partie fixe (13b) de la bague (13) est opposée à la partie pointue de l'élément d'étanchéité (15) via un léger intervalle radial (C) pour former un joint à labyrinthe (16) entre eux, l'intervalle radial (C) étant de 0,75 mm ou moins.
